# EUROPEAN PATENT SPECIFICATION

(11) **EP 0 863 786 B1**
(45) Date of publication and mention of the grant of the patent: **06.12.2000**
(21) Application number: 96931315.4
(22) Date of filing: 14.08.1996
(51) Int. Cl.: B01D 29/11, B01D 29/35, B01D 29/37, B01D 35/02

(54) **A FILTER ARRANGEMENT**
FILTERVORRICHTUNG
DISPOSITIF DE FILTRAGE

(30) Priority: 21.09.1995 SE 9503279
(43) Date of publication of application: 16.09.1998
(73) Proprietor: Avonni AB, 182 64 Djursholm (SE)
(72) Inventor: PERSSON, sa, S-184 92 kersberga (SE)
(74) Representative: Nilsson, Karl Ingvar
(86) International application number: SE9601013
(87) International publication number: WO9710890

(56) References cited:
- DE-A- 1 536 939
- SE-B- 311 342

## Description

The present invention relates to a filter arrangement for extracting solid particles from a flowing liquid, said arrangement being of the kind which includes a filter housing, at least one tubular filter which is mounted in said housing so that the liquid will flow through the filter wall, and a liquid inlet and outlet.

A filter or screen arrangement of the aforesaid kind is known from DE 1 536 939, for instance. In this case, the tubular filter is positioned in the filter housing so that one end of the filter captures the whole of the liquid flow, whereas the other end of the filter lies against the inner surface of the filter housing such as to prevent liquid from flowing through this end of the filter.

The object of the present invention is to provide a novel filter arrangement which is particularly improved with regard to the flow of liquid therethrough.

Accordingly, it is proposed in accordance with the invention that in the case of a filter arrangement of the kind defined in the introduction the mutually opposite ends of the filter or of each filter are disposed so that liquid will flow simultaneously through both of said ends, and that the filter or filters are surrounded by an inner casing mounted in the filter housing and spaced from the walls thereof such as to leave the mutually opposite filter ends free, wherein the interior of said inner casing is connected to either the inlet or the outlet, preferably the outlet, while the space between the filter housing and the inner casing is connected to the other of said inlet or outlet, preferably the inlet. This arrangement achieves an advantageous reduction in the resistance to flow across the filter or filters, and also utilizes the total filter area more uniformly. Another advantage is that heavier particles are able to follow the wall of the filter housing to the lower part of said housing, without entering the filter or filters. The filter housing may be provided conventionally in its lowermost part with an opening through which particles that have collected on the housing bottom can be removed.

The filter housing and/or the inner casing suitably has a rounded, e.g. spherical shape, thereby obtaining favourable, low flow resistances. From the aspect of liquid flow, it is also favourable for the combined filter-end area to coincide generally with the inlet area of the filter arrangement.

When the filter housing is typically provided with a bottom pipe stub that can be closed with a removable cap, the inner casing can be provided advantageously with a bottom opening which lies opposite the pipe stub and through which the filter or filters can be removed from the casing and from the filter housing for cleaning purposes for instance, and thereafter returned to the filter housing and mounted detachably in the inner casing. This enables the filter or filters to be conveniently locked releasably in its/their working position or working positions in the inner casing. For instance, the filter or filters may be provided with a handle for facilitating the removal and replacement thereof and for coaction with a locking device that can be moved manually to one side and which functions to releasably lock the filter or filters in the inner casing. When the filter arrangement includes a plurality of filters placed side-by-side, the ends of the filters may be fitted with end plates which function to hold the filters together and which sealingly bridge the spaces between the filter openings.

A particular advantage is obtained when the filter arrangement is integrated with a gas separator connected directly to either the inlet or the outlet of said filter arrangement. According to one preferred embodiment, the filter arrangement and the gas separator include a generally cylindrical outer casing which is common to both the filter arrangement and the gas separator and which in its state of use has an at least generally horizontal axis, wherein the filter arrangement and the gas separator are mutually separated by a partition wall that extends transversely in the casing, and wherein a pipe through which the liquid flows and which has an apertured upper part through which rising gas bubbles can depart extends in the gas separator between one end of the outer casing and said partition wall.

The invention will now be described in more detail with reference to a number of exemplifying embodiments thereof and also with reference to the accompanying drawings, in which
- Fig. 1: is a vertical axial section view of a first embodiment of an inventive filter arrangement, said view being taken on the line I-I in Fig. 2;
- Fig. 2: is a horizontal sectioned view taken on the line II-II in Fig. 1;
- Fig. 3: is a vertical cross-sectional view of the arrangement shown in Figs. 1 and 2;
- Fig. 4: is a view corresponding to Fig. 1 and illustrating a second embodiment of the inventive filter arrangement;
- Fig. 5: is a horizontal sectional view taken on the line V-V in Fig. 4;
- Fig. 6: is a vertical axial section view of a combined filter arrangement and gas separator in accordance with the invention;
- Fig. 7: is a cross-sectional view taken on the line VII-VII in Fig. 6; and
- Fig. 8: is a view corresponding to Fig. 6 and illustrating another embodiment of a combined filter arrangement and gas separator according to the present invention.

Corresponding or generally corresponding components of the illustrated embodiments have been identified with the same reference signs.

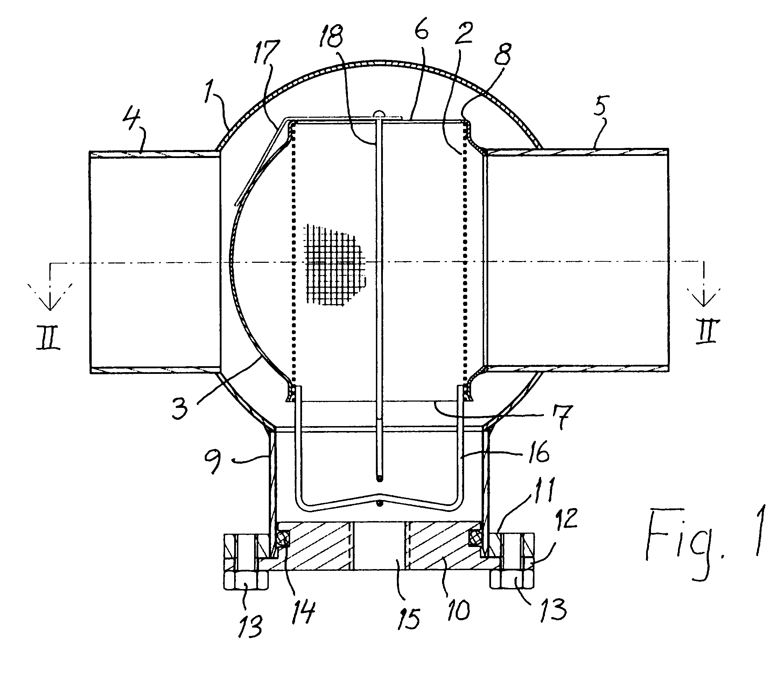

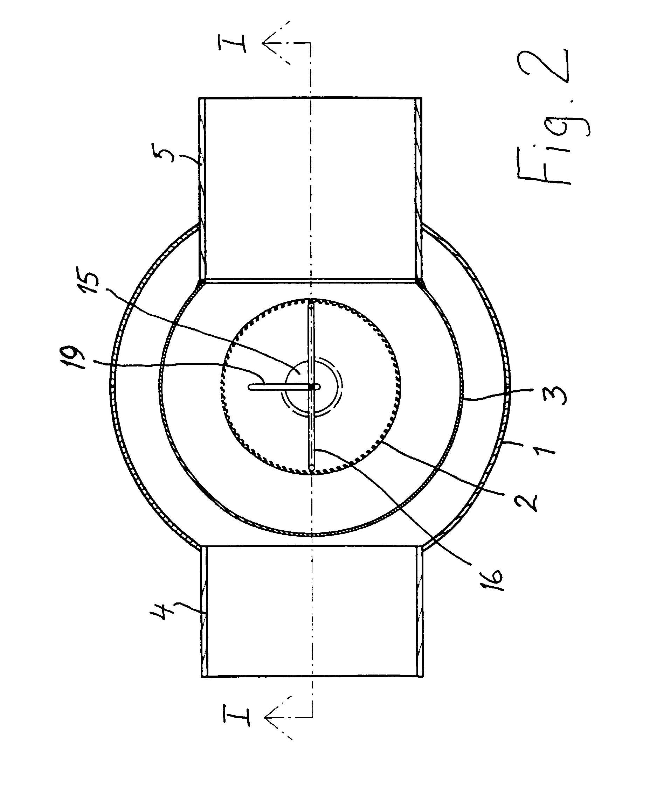

The filter arrangement shown in Figs. 1-3 comprises a filter housing 1, a cylindrical filter 2 which is open at both ends thereof, and an inner casing 3. The reference numeral 4 identifies an inlet for liquid to be filtered or screened during is passage through the filter arrangement while the reference numeral 5 identifies a liquid outlet. The inlet 4 is connected to the filter housing 1, whereas the outlet 5 is connected to that part of the inner casing 3 which surrounds the filter 2. The inner casing 3 and the ends of the filter are spaced from the inner surface of the filter housing 1, and the inner casing is provided with top and bottom openings 6, 7 which are configured so as to leave the mutually opposite openings of the filter 2 free for the simultaneous throughflow of liquid. The filter 2 is held correctly positioned in the inner casing 3 with the aid of an upper, inwardly directed filter localizing flange 8, against the inside of which the upper end of the filter 2 is pressed by means of a locking device ( described in more detail below) for detachably locking the filter 2 firmly in its working position in the inner casing 3.

There is provided opposite the bottom opening 7 of the inner casing 3 a bottom pipe stub 9 which can be closed by means of a removable cap or cover 10. The cap 10 is fastened with the aid of a flange joint formed by flanges 11, 12 on the pipe stub and on the cap respectively, and bolts 13. The cap, or cover member, is sealed by means of an O-ring 14 received in a peripheral groove in the cap 10. The cap 10 is provided with a central opening 15 which allows particles that have collected in the pipe stub 9 to be emptied and which can be sealed with a plug or like device, not shown. The entire cap 10 is removed when wishing to remove the filter 2 for cleaning purposes, for instance.

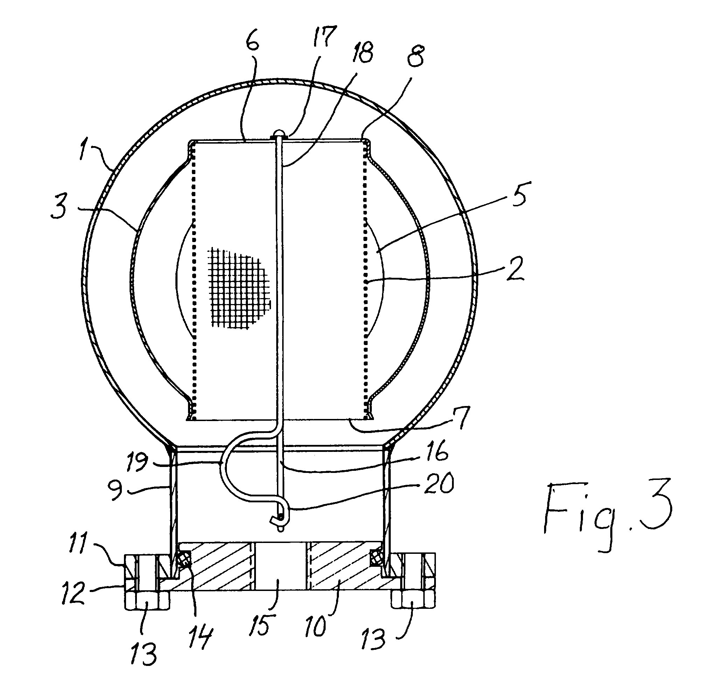

The filter 2 is provided with a stirrup-shaped handle 16 which facilitates removal of the filter 2 from the filter housing. The filter 2 can be locked in its working position in the inner casing 3 by means of a locking device provided to this end. In the embodiment shown in Figs. 1-3, the locking device includes an angled leaf spring 17 which is connected to the inner casing 3 and one leg of which extends generally diagonally over the larger part of the opening 6. As will best be seen from Fig. 3, said leg has attached thereto a rod 18 which extends generally centrally down through the filter 2 and the bottom end of which includes generally U-shaped upper and lower parts 19, 20 which are bent outwards in mutually opposite directions, of which parts the lower part 20 is intended to grip around the stirrup-shaped handle 16 in the illustrated fashion and therewith hold the upper end of the filter 2 pressed against the flange 8. The upper, curved part 19 functions as a handle for urging the part 20 down against the action of a spring 17 and to one side out of engagement with the filter handle 16 after removing the cap 10, so as to enable the filter 2 to be removed from the casing 3 and from the filter housing 1.

The filter housing 1 and/or the inner casing 3 may conveniently have a spherical shape, thereby achieving advantages with respect to mechanical strength and with respect to liquid flow through the arrangement. The combined area of the filter-end will preferably be equally as large as the area of the inlet 4 and also roughly equal to the area of the outlet 5. This will result in a relatively low pressure drop across the filter arrangement as the liquid flows in through the inlet 4, along the inside of the filter housing 1 and the outside of the inner casing 3 to and through the openings 6, 7 and from there into the filter 2, wherefrom the liquid exits through the filter wall while extracting solid particles from said liquid, and leaves through the outlet 5. Because liquid flows into the cylindrical filter 2 from both ends thereof, the whole of the filtering surface will be utilized generally uniformly, and the area of the filter surface can be increased or decreased with relatively small affect on the outer dimensions on the filter arrangement. In the illustrated, preferred orientation of the filter arrangement, solid particles carried by the liquid are able to fall straight down into the bottom pipe stub 9 and are also extracted from the liquid at the filter surface and fall from said surface down into said pipe stub 9, from which the particles can be removed through the opening 15 or from the filter housing after removing the cap 10. It is also possible to reverse the direction of flow through the filter arrangement, although this is less favourable because the separated particles would collect within the inner casing 3. On the other hand, short duration reversal of the flow direction may be favourable, since this would enable particles that had fastened on the inside of the filter 2 to be released therefrom and therewith fall down into the pipe stub 9.

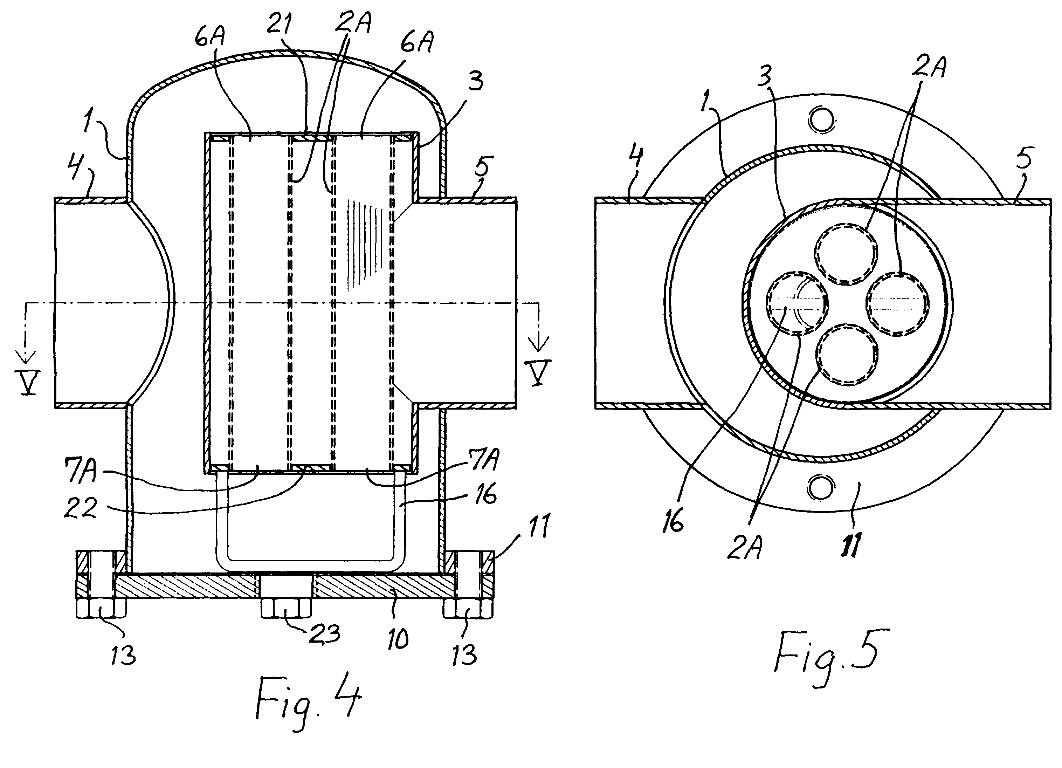

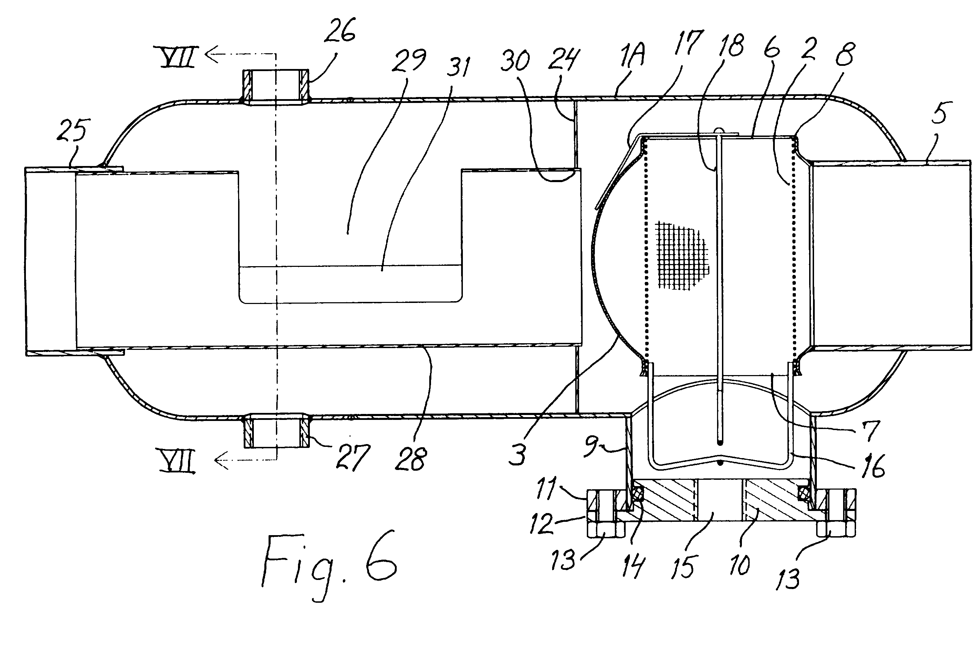

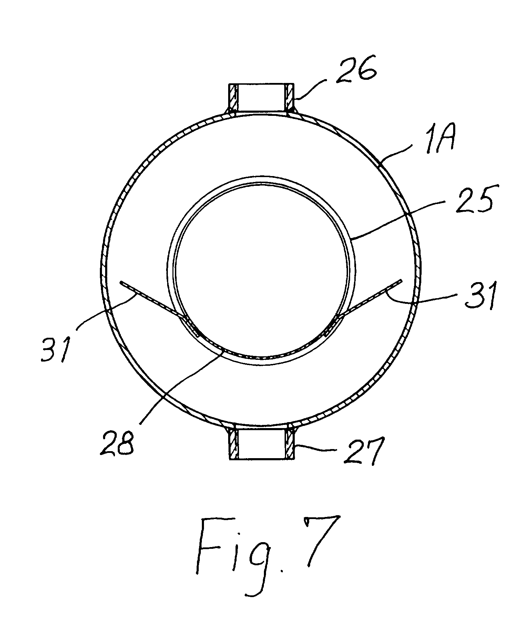

In the filter arrangement embodiment shown in Figs. 4 and 5, the filter housing 1 and the inner casing 3 have a configuration different to that of the Figs. 1-3 embodiment. For instance, the screen housing 1 is generally cylindrical and has an arched upper part. The inner casing 3 is also cylindrical and is open at both ends. The inner casing 3 is positioned excentrically in the filter housing 1, more specifically such that the liquid will flow throughout the whole of the space between the housing 1 and the casing 3 at essentially the same rate of flow. The arrangement includes several tubular filters 2A, and the open ends of the filters are fitted in circular end plates 21, 22 which are provided with corresponding openings 6A, 7A and which are firmly connected to the filters 2A in sealing abutment with the inside of the cylindrical inner casing 3. The assembly comprised of the filters 2A and the end plates 21, 22 is provided with a handle 16 and is held removably in position in the inner casing 3 by virtue of the handle 16 resting against the inner surface of a bottom cap 10 removably connected to the filter housing 1. The cap is provided centrally thereof with a cleaning opening that is closed by a threaded plug 23. Remaining components of the arrangement shown in Figs. 4 and 5 have been identified by the same reference signs as those used to identify corresponding components of the embodiment shown in Figs. 1-3 and will not be described in detail here.

The use of a plurality of tubular filters 2A enables the total filter area to be increased without increasing the volume of the filter assembly. The particles extracted from the liquid flowing through the filter arrangement collect essentially on the removable bottom 10 of the filter housing 1. The bottom part of the filter housing 1 forms a bottom pipe stub corresponding to the pipe stub 9 in Figs. 1-3.

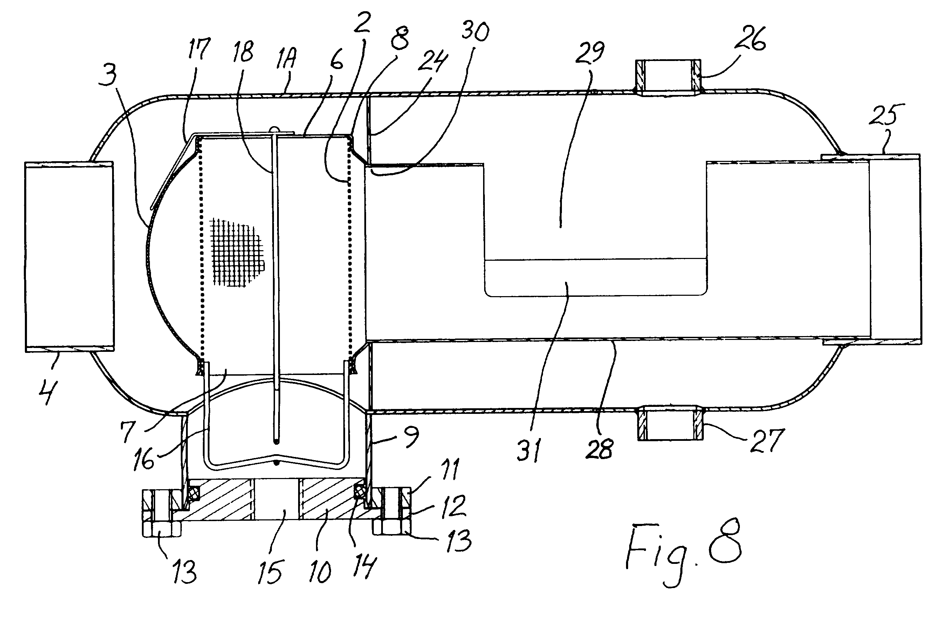

Figs. 6 and 7 illustrate an embodiment in which a filter arrangement that corresponds in all essentials with the filter arrangement shown in Figs. 1-3 is combined with a gas separator. Such a gas separator can be used advantageously in a liquid circulating system, since the occurrence of gas, e.g. air in systems that operate with water-carried heat, are liable to lower efficiency and cause the occurrence of cavitations in circulation pumps. The gas separator and the filter arrangement include a common outer casing 1A in the form of a horizontal cylinder having arched or curved ends and separated by a transverse partition wall 24. The gas separator has an inlet 25 and closable top and bottom pipe stubs 26, 27 through which collected gas and collected solid particles or sludge can be removed when so required. Extending centrally through the interior of the gas separator between the inlet 25 and the partition wall 24 is a pipe 28 whose upper part is apertured to a large extent, as shown at 29, and the downstream end 30 of which that passes through the partition wall 24 forms the filter arrangement inlet. Gas bubbles that accompany the liquid as it passes through the gas separator are able to depart upwardly from the pipe 28, through its apertured part 29, so as to collect finally in the upper part of the gas separator. Solid particles can also be separated from the liquid to a certain extent, these particles being removed through the pipe stub 27. As will be best seen from Fig. 7, the desired flow pattern through the gas separator is promoted with the aid of wings or baffles 31. The liquid entering the filter arrangement through the pipe end 30 is filtered in the manner described with reference to Figs. 1-3.

The embodiment illustrated in Fig. 8 differs from the embodiment illustrated in Figs. 6 and 7 solely by virtue of the filter arrangement being located forwardly of the gas separator built together therewith. The liquid filtered or screened in the filter arrangement departs through the filter housing outlet, from which it passes in through the end 30 of the partially apertured pipe 28 and leaves the gas separator through the pipe stub 25.

## Claims

1. A filter arrangement for extracting solid particles from a flowing liquid, said arrangement including a filter housing (1), at least one tubular filter (2; 2A) mounted in the housing such that the liquid will flow through the filter wall, and a liquid inlet and liquid outlet (4, 5), **characterized** in that the arrangement is such that the liquid will flow simultaneously through the opposite ends of the filter or filters (2; 2A), and in that the filter or filters (2; 2A) are surrounded by a liquid-impervious inner casing (3) which is mounted in spaced relationship with the walls of the filter housing and which leaves the opposite filter ends free and the interior of which is connected to either the inlet or the outlet (4, 5), preferably the outlet (5), while the space between the filter housing (1) and the inner casing (3) is connected to the other of said inlet or outlet, preferably to the inlet (4).

2. An arrangement according to Claim 1, **characterized** in that the filter housing (1) has a generally spherical shape.

3. An arrangement according to Claim 1 or Claim 2, **characterized** in that the inner casing (3) has a generally spherical shape.

4. An arrangement according to any one of Claims 1-3, **characterized** in that the combined filter-end area coincides essentially with the area of the inlet (4) and suitably also with the area of the outlet (5).

5. An arrangement according to any one of Claims 1-4, in which the bottom of the filter housing (1) is provided with a pipe stub (9) which is closed by a removable cap or cover (10), **characterized** in that the inner casing (3) is provided opposite the pipe stub (9) with a bottom opening through which the filter or filters (2; 2A) can be removed from the inner casing and the filter housing and returned to said filter housing (1) and detachably mounted in the inner casing (3).

6. An arrangement according to Claim 5, **characterized** in that the filter or filters (2; 2A) can be removably localized in a working position in the inner casing (3).

7. An arrangement according to Claim 6, **characterized** in that the filter or filters (2; 2A) is/are provided with a handle (16) for facilitating removal and insertion of said filter/filters, wherein a locking device (17-20) which can be moved manually to one side and which functions to releasably lock the filter or filters (2; 2A) in a working position in the inner casing (3) is provided for coaction with the handle (16) to this end.

8. An arrangement according to any one of Claims 1-7, **characterized** in that the filter arrangement is integrated with a gas separator (24-29) which is connected directly to either the inlet or the outlet of said filter arrangement.

9. An arrangement according to Claim 8, **characterized** in that said arrangement and said gas separator (24-29) have a common, generally cylindrical outer casing (1A) whose axis is at least generally horizontal in a working position, wherein the filter arrangement and gas separator are mutually separated by a transverse partition wall (24) in the outer casing, and wherein the gas separator includes a pipe (28) through which the liquid flows and which extends between one end of the outer casing (1A) and the partition wall (24), and wherein the upper part (29) of the pipe (28) is apertured to permit gas bubbles to depart upwardly therefrom.

## Patentansprüche

1. Filtervorrichtung zum Abscheiden von Festpartikeln aus einer strömenden Flüssigkeit, wobei die Vorrichtung ein Filtergehäuse (1), zumindest einen im Gehäuse angebrachten rohrförmigen Filter (2; 2A), derart, daß die Flüssigkeit durch die Filterwand strömt, und einen Flüssigkeitseinlaß und einen Flüssigkeitsauslaß (4,5) aufweist, **dadurch gekennzeichnet,** daß die Vorrichtung derart beschaffen ist, daß die Flüssigkeit gleichzeitig durch die gegenüberliegenden Enden des Filters oder der Filter (2; 2A) hindurchströmt, und daß der Filter oder die Filter (2; 2A) von einem flüssigkeitsundurchlässigen Innengehäuse (3) umgeben sind, das im Abstandsverhältnis zu den Wänden des Filtergehäuses angebracht ist und das die gegenüberliegenden Filterenden freiläßt und dessen Innenraum entweder mit dem Einlaß oder dem Auslaß (4,5), vorzugsweise dem Auslaß (5), verbunden ist, während der Raum zwischen dem Filtergehäuse (1) und dem Innengehäuse (3) mit dem anderen, Einlaß oder Auslaß, vorzugsweise dem Einlaß (4), verbunden ist.

2. Vorrichtung nach Anspruch 1, dadurch gekennzeichnet, daß das Filtergehäuse (1) eine im allgemeinen kugelige Form besitzt.

3. Vorrichtung nach Anspruch 1 oder Anspruch 2, dadurch gekennzeichnet, daß das Innengehäuse (3) eine im allgemeinen kugelige Form besitzt.

4. Vorrichtung nach einem der Ansprüche 1 bis 3, dadurch gekennzeichnet, daß die zusammengenommene Filterendfläche im wesentlichen mit der Fläche des Einlasses (4) und zweckmäßig auch mit der Fläche des Auslasses (5) übereinstimmt.

5. Vorrichtung nach einem der Ansprüche 1 bis 4, bei der der Boden des Filtergehäuses (1) mit einem Rohrstutzen (9) versehen ist, der von einem abnehmbaren Verschluß bzw. Deckel (10) verschlossen ist, dadurch gekennzeichnet, daß das Innengehäuse (3) gegenüber dem Rohrstutzen (9) mit einer unteren Öffnung versehen ist, durch die der Filter oder die Filter (2; 2A) aus dem Innengehäuse und dem Filtergehäuse entfernt und in das Filtergehäuse (1) zurückgeführt und abnehmbar im Innengehäuse angebracht werden können.

6. Vorrichtung nach Anspruch 5, dadurch gekennzeichnet, daß der Filter oder die Filter (2; 2A) abnehmbar in einer Arbeitsstellung im Innengehäuse zentriert werden können.

7. Vorrichtung nach Anspruch 6, dadurch gekennzeichnet, daß der Filter oder die Filter (2; 2A) mit einem Handgriff (16) zur Erleichterung der Entnahme und des Einsetzens des Filters/der Filter versehen ist/sind, wobei eine Verriegelungsvorrichtung (17-20), die von Hand zu einer Seite bewegt werden kann und die so arbeitet, daß der Filter oder die Filter (2; 2A) in einer Arbeitsstellung im Innengehäuse (3) lösbar verriegelt werden, zum Zusammenwirken mit dem Handgriff (6) zu diesem Zweck vorgesehen ist.

8. Vorrichtung nach einem der Ansprüche 1 bis 7, dadurch gekennzeichnet, daß die Filtervorrichtung mit einem Gasabscheider (24-29) vereinigt ist, der direkt entweder mit dem Einlaß oder dem Auslaß der Filtervorrichtung verbunden ist.

9. Vorrichtung nach Anspruch 8, dadurch gekennzeichnet, daß die Vorrichtung und der Gasabscheider (24-29) ein gemeinsames, im allgemeinen zylindrisches Außengehäuse (1A) besitzen, dessen Achse zumindest im allgemeinen horizontal in einer Arbeitsstellung verläuft, wobei die Filtervorrichtung und der Gasabscheider voneinander durch eine Quertrennwand (24) im Außengehäuse voneinander getrennt sind und wobei der Gasabscheider ein Rohr (28) aufweist, durch das die Flüssigkeit strömt und das sich zwischen einem Ende des Außengehäuse (1A) und der Trennwand (24) erstreckt, und wobei der obere Teil (29) des Rohrs (28) öffnungsversehen ist, damit Gasblasen von dort nach oben entweichen können.

## Revendications

1. Dispositif de filtrage pour extraire les particules solides d'un liquide en circulation, ledit dispositif comportant un logement de filtre (1), au moins un filtre tubulaire (2 ; 2A) monté dans le logement de telle sorte que le liquide s'écoule à travers la paroi du filtre et un orifice d'entrée de liquide et un orifice de sortie de liquide (4, 5), caractérisé en ce que le dispositif est tel que le liquide s'écoule simultanément à travers les extrémités opposées du ou des filtres (2 ; 2A) et en ce que le ou les filtres (2 ; 2A) sont entourés par un châssis interne étanche aux liquides (3) qui est monté en relation d'espacement avec les parois du logement de filtre, qui laisse libres les extrémités opposées du filtre et dont l'intérieur est relié à l'orifice d'entrée ou à l'orifice de sortie (4 ou 5), de préférence l'orifice de sortie (5), tandis que l'espace entre le logement de filtre (1) et le châssis interne (3) est connecté à l'autre desdits orifices d'entrée ou de sortie, de préférence à l'orifice d'entrée (4).

2. Dispositif selon la revendication 1, caractérisé en ce que le logement de filtre (1) a une forme généralement sphérique.

3. Dispositif selon la revendication 1 ou la revendication 2, caractérisé en ce que le châssis interne (3) a une forme généralement sphérique.

4. Dispositif selon une quelconque des revendications 1 à 3, caractérisé en ce que la surface combinée d'extrémité de filtre coïncide essentiellement avec la surface de l'orifice d'entrée (4) et également, de façon adéquate, avec la surface de l'orifice de sortie (5).

5. Dispositif selon une quelconque des revendications 1 à 4, dans lequel le fond du logement de filtre (1) est muni d'un morceau de tuyau (9) refermé par un couvercle ou un capuchon amovible (10), caractérisé en ce que le châssis interne (3) est muni, en regard du morceau de tuyau (9), d'une ouverture de fond à travers laquelle le ou les filtres (2 ; 2A) peuvent être retirés du châssis interne et du logement de filtre puis replacés dans ledit logement de filtre (1) et remontés de façon détachable dans le châssis interne (3).

6. Dispositif selon la revendication 5, caractérisé en ce que le ou les filtres (2 ; 2A) peuvent être positionnés de façon amovible dans une position de travail dans le châssis interne (3).

7. Dispositif selon la revendication 5, caractérisé en ce que le ou les filtres (2 ; 2A) est ou sont muni(s) d'une poignée (16) pour faciliter le retrait et l'insertion dudit ou desdits filtre(s), un dispositif de verrouillage (17 à 20), pouvant être déplacé manuellement d'un côté et qui agit pour verrouiller de façon libérable le ou les filtres (2 ; 2A) dans une position de travail dans le châssis interne (3), étant prévu pour coopérer avec la poignée (16) à cet effet.

8. Dispositif selon une quelconque des revendications 1 à 7, caractérisé en ce que le dispositif de filtrage est intégré avec un séparateur de gaz (24 à 29) qui est connecté directement à l'orifice d'entrée ou l'orifice de sortie dudit dispositif de filtrage.

9. Dispositif selon la revendication 8, caractérisé en ce que ledit dispositif et ledit séparateur de gaz (24 à 29) ont un châssis extérieur commun généralement cylindrique (1A) dont l'axe est au moins généralement horizontal en position de travail, le dispositif de filtrage et le séparateur de gaz étant mutuellement séparés par une cloison transversale (24) dans le châssis extérieur, le séparateur de gaz comportant un tuyau (28) à travers lequel s'écoule le liquide et qui s'étend entre une extrémité du châssis extérieur (1A) et la cloison (24), et la partie supérieure (29) du tuyau (28) étant munie d'ouvertures pour permettre aux bulles de gaz de s'échapper de là vers le haut.
